# EUROPÄISCHE PATENTSCHRIFT

(11) **EP 3 369 896 B1**
(45) Veröffentlichungstag und Bekanntmachung des Hinweises auf die Patenterteilung: **15.09.2021**
(21) Anmeldenummer: 18159032.4
(22) Anmeldetag: 28.02.2018
(51) Int. Cl.: F01N 3/021, F01N 9/00, F01N 11/00

(54) **VERFAHREN ZUM ERMITTELN DES BELADUNGSZUSTANDS EINES PARTIKELFILTERS UND VERBRENNUNGSMOTOR**
METHOD FOR DETERMINING THE LOAD STATE OF A PARTICLE FILTER AND COMBUSTION ENGINE
PROCÉDÉ DE DÉTERMINATION DE L'ÉTAT DE CHARGE D'UN FILTRE À PARTICULES ET MOTEUR À COMBUSTION INTERNE

(30) Priorität: 03.03.2017 DE 102017104469
(43) Veröffentlichungstag der Anmeldung: 05.09.2018
(73) Patentinhaber: VOLKSWAGEN AKTIENGESELLSCHAFT, 38440 Wolfsburg (DE)
(72) Erfinder: MANDAUSCH, Michael, 38557 Osloß (DE)
(74) Vertreter: Gulde & Partner

(56) Entgegenhaltungen:
- WO-A1-2009/017566
- DE-A1- 10 140 048
- DE-A1-102013 211 781
- DE-A1-102015 211 151
- US-A1- 2009 183 499
- US-A1- 2013 098 033

## Beschreibung

Die Erfindung betrifft ein Verfahren zum Ermitteln des Beladungszustandes eines Partikelfilters in der Abgasanlage eines Verbrennungsmotors sowie einen Verbrennungsmotor mit einem Abgasturbolader und einem in der Abgasanlage angeordneten Partikelfilter.

Die aktuelle und eine zukünftig immer schärfer werdende Abgasgesetzgebung stellt hohe Anforderungen an die motorischen Rohemissionen und die Abgasnachbehandlung von Verbrennungsmotoren. Bei Dieselmotoren ist ein Partikelfilter zum Zurückhalten der bei der motorischen Verbrennung entstehenden Rußpartikel seit vielen Jahren Standard und wird heutzutage bei fast allen Dieselmotoren zur Abgasnachbehandlung eingesetzt. Mit der Einführung der Abgasnorm EU6 für Ottomotoren wird ein Grenzwert für die Partikelemission vorgeschrieben, sodass es auch bei Ottomotoren zur Notwendigkeit des Einsatzes eines Partikelfilters kommen kann. Der Partikelfilter wird im Fahrbetrieb eines Kraftfahrzeuges mit Partikeln beladen, wobei der Abgasgegendruck im Abgaskanal mit der Beladung zunimmt. Diese Beladung des Partikelfilters kann beispielsweise über eine Differenzdruckmessung im Abgaskanal vor und nach dem Partikelfilter oder eine Modellierung in einem Steuergerät des Verbrennungsmotors bestimmt werden. Damit das Abgasgegendruckniveau nicht zu weit ansteigt, muss der Partikelfilter kontinuierlich oder periodisch regeneriert werden. Um eine thermische Oxidation der Rußpartikel auf dem Partikelfilter mit Sauerstoff durchzuführen, sind eine hinreichende Regenerationstemperatur sowie das gleichzeitige Vorliegen von Restsauerstoff im Abgas notwendig. Bei Verbrennungsmotoren mit einem Abgasturbolader führt die Zunahme des Abgasgegendrucks durch die im Partikelfilter zurückgehaltenen Rußpartikel dazu, dass das Druckgefälle über die Turbine des Abgasturboladers und somit die mögliche Turbinenleistung abnimmt. Da die Turbine und der Verdichter des Abgasturboladers mechanisch gekoppelt sind, sinkt folglich auch das mögliche Verdichterdruckverhältnis. Der Verdichter kann den geforderten Ladedruck nicht mehr zur Verfügung stellen. Aus diesem Grund verfügen Abgasturbolader über Regeleinrichtungen wie ein Wastegate-Ventil und/oder eine variable Turbinengeometrie, welche über einen Aktuator verstellt werden können. Mithilfe des Aktuators kann die Position der Regeleinrichtung verändert werden, wodurch direkt die Turbinenleistung beeinflusst werden kann.

Aus der DE 601 09 514 T2 ist eine Vorrichtung zur Regeneration eines Partikelfilters im Abgaskanal eines Dieselmotors bekannt. Dabei werden unterschiedliche Informationen, welche mit verschiedenen Betriebsparametern des Verbrennungsmotors und mit diesem verbundener Organe zusammenhängen, ausgewertet. Eine Regeneration des Partikelfilters wird eingeleitet wird, wenn ein entsprechender Differenzdruck über den Partikelfilter vorherrscht und zur Einleitung der Regenerationsphase des Partikelfilters eine Mehrfacheinspritzung von Kraftstoff in die Brennräume des Dieselmotors erfolgt, um die Abgastemperatur auf eine zur Regeneration des Partikelfilters notwendige Temperatur anzuheben.

Aus der DE 10 2006 054 043 A1 ist ein Dieselmotor mit einem im Abgaskanal des Dieselmotors angeordneten Abgasturbolader und einem Partikelfilter bekannt, wobei der Abgasturbolader einen in der Frischluftanlage des Verbrennungsmotors stromaufwärts eines Ladeluftkühlers angeordneten Verdichter antreibt, wobei der Verbrennungsmotor eine Niederdruck-Abgasrückführung aufweist, welche Abgas aus dem Abgaskanal stromabwärts der Turbine des Abgasturboladers entnimmt und diese der Frischluftanlage stromaufwärts des Verdichters zuführt. Um die Abgasrückführung zu steuern, ist in der Niederdruck-Abgasrückführung ein Abgasrückführungsventil angeordnet, welches über einen Differenzdrucksensor gesteuert wird.

Aus der DE 10 2009 004 416 A1 ist ein Verfahren zum Betrieb von Komponenten zur Abgasnachbehandlung, die im Abgastrakt eines mit einem Abgasturboladers aufgeladenen Verbrennungsmotors angeordnet sind, bekannt. Dabei wird zur Temperaturerhöhung der Abgasstrom stromaufwärts der Turbine in einen ersten Teilstrom und einen zweiten Teilstrom aufgeteilt und beide Teilströme der Abgasnachbehandlungskomponente, insbesondere einem Partikelfilter, zugeführt. Um bei mehreren im Abgastrakt angeordneten Abgasnachbehandlungskomponenten jede Komponente mit einer für den jeweiligen Abgasnachbehandlungsschritt möglichst günstigen Temperatur anzuströmen, wird die Aufteilung der Teilströme entsprechend gesteuert.

Die US 2013 / 098 033 A1 offenbart einen Verbrennungsmotor, in dessen Abgasanlage ein Partikelfilter angeordnet ist. Dabei erfolgt eine Anpassung der Einspritzmenge des Kraftstoffs in die Brennräume des Verbrennungsmotors, eine Verstellung der Leitgeometrie der Turbine des Abgasturboladers sowie eine Anpassung der Abgasrückführung, wenn eine Regeneration des Partikelfilters erforderlich ist.

Aus der US 2009 / 183 499 A1 sind ein Verfahren und eine Vorrichtung zur Regeneration eines Partikelfilters im Abgaskanal eines Verbrennungsmotors bekannt. Dabei ist eine Bypassleitung vorgesehen, mit welcher Frischluft aus dem Ansaugtrakt in den Partikelfilter eingeblasen wird, um die Temperatur des Partikelfilters zu senken und eine thermische Schädigung des Partikelfilters zu vermeiden.

Die WO 2009 / 017 566 A1 offenbart ein Kraftfahrzeug mit einem Verbrennungsmotor und einer an den Verbrennungsmotor angeschlossenen Abgasanlage sowie mit einem Kontrollsystem für die Abgasnachbehandlung, wobei der Abgasgegendruck in der Abgasanlage, insbesondere im Partikelfilter begrenzt werden soll und die Abgastemperatur durch eine gesteuerte Abgasführung des Abgasstroms limitiert wird.

Aus der DE 10 2015 211 151 A1 sind ein Verfahren und eine Vorrichtung zur Ermittlung der Beladung eines Abgaspartikelfilters in einer Abgasanlage eines mittels eines Abgasturboladers aufgeladenen Verbrennungsmotors bekannt. Dabei wird zur Ermittlung des Beladungszustands des Abgaspartikelfilters eine Analyse des Verhalten eines Ladedruckreglers oder des Ladedrucks des Abgasturboladers vorgenommen.

Der Erfindung liegt nun die Aufgabe zugrunde, einen Beladungszustand des Partikelfilters anhand bereits vorhandener Sensoren zu erkennen und somit auf alternative Art und Weise eine besonders preisgünstige und zuverlässige Ermittlung des Beladungszustands des Partikelfilters zu ermöglichen.

Erfindungsgemäß wird die Aufgabe durch ein Verfahren zum Ermitteln des Beladungszustandes nach Anspruch 1 gelöst.

Durch das erfindungsgemäße Verfahren ist eine Bestimmung des Beladungszustands des Partikelfilters bei einem mittels Turbolader aufgeladenen Verbrennungsmotors möglich. Dabei kann auf eine zusätzliche Sensorik am Partikelfilter, insbesondere auf einen Differenzdruckmesser oder einen Radiofrequenzsensor, verzichtet und somit Kosten eingespart werden. Zudem ist keine aufwendige Leitungsführung zu den Drucksensoren oder dem Radiofrequenzsensor notwendig. Zudem kann auf ein aufwendiges Diagnosekonzept für die Sensoren verzichtet werden.

Durch die in den abhängigen Ansprüchen aufgeführten Merkmale sind vorteilhafte Weiterentwicklungen und Verbesserungen des im unabhängigen Anspruch angegebenen Verfahrens zur Ermittlung des Beladungszustands eines Partikelfilters möglich. Erfindungsgemäß ist vorgesehen, dass in einem Luftversorgungssystem des Verbrennungsmotors ein Luftmassenmesser angeordnet ist, wobei zusätzlich ein Frischluftstrom ermittelt wird, und der ermittelte Frischluftstrom zusätzlich in die Berechnung des Beladungszustands des Partikelfilters einfließt. Durch die zusätzliche Auswertung eines Signals des Luftmassenmessers in dem Luftversorgungssystem des Verbrennungsmotors kann festgestellt werden, ob eine Verstellung der Regeleinrichtung tatsächlich auf einen Anstieg des Abgasgegendrucks infolge einer zunehmenden Beladung des Partikelfilters mit Rußpartikeln zurückzuführen ist, oder ob diese Verstellung sich aus einer Leckage in der Frischluftleitung und einem entsprechenden Druckabfall auf der Frischluftseite ergibt. Somit kann zwischen einer Leckage-bedingten Verstellung und einer dem Grundgedanken der Erfindung entsprechenden Verstellung aufgrund einer steigenden Beladung des Partikelfilters unterschieden werden. Somit ist eine On-Board-Diagnose möglich, sodass eine Fehlfunktion ausgeschlossen werden kann. Zusätzlich kann durch den Luftmassenmesser die Füllung der Brennräume des Verbrennungsmotors erfasst werden, wodurch eine exaktere Zumessung des Kraftstoffes und geringere Rohemissionen bei der Verbrennung möglich sind.

Besonders bevorzugt ist dabei, wenn der Frischluftstrom im Luftversorgungssystem stromaufwärts eines Verdichters des Abgasturboladers ermittelt wird. Stromaufwärts des Verdichters ist eine besonders einfache und genaue Bestimmung des Frischluftstromes möglich. Dabei kann der Luftmassenmesser, insbesondere ein Heißfilmluftmassenmesser als separates Bauteil an einem Ansaugkanal des Luftversorgungssystems angeordnet sein oder in einen Luftfilter integriert sein. Prinzipiell ist auch eine Erfassung des Frischluftstromes stromabwärts des Verdichters möglich, aufgrund der bei der Verdichtung der Luft auftretenden Verwirbelungen ist dies jedoch eher ungünstig und reduziert die Messgenauigkeit.

In einer nicht erfinderischen Ausgestaltung des Verfahrens ist vorgesehen, dass die Regeleinrichtung ein Waste-Gate-Ventil umfasst, wobei zur Ermittlung des Beladungszustands des Partikelfilters die Stellung des Waste-Gate-Ventils erfasst wird. Bei einer zunehmenden Beladung des Partikelfilters steigt der Abgasgegendruck in der Abgasanlage. Dieser Druckanstieg wird durch ein Schließen des Waste-Gate-Ventils kompensiert, um einen größeren Abgasmassenstrom über die Turbine des Abgasturboladers zu leiten. Der Abgasmassenstrom über das Waste-Gate sinkt. Somit wird das Druckniveau in der Abgasanlage stromaufwärts der Turbine angehoben. Das Druckgefälle über der Turbine steigt, wodurch sich die Turbinenleistung wieder auf das Niveau erhöht, welches die Turbine vor der Verstellung des Waste-Gate-Ventils bei unbeladenem Partikelfilter und geringerem Abgasgegendruck erreicht hat. Aus der Stellung des Waste-Gate-Ventils lässt sich somit auf die Beladung des Partikelfilters schließen, ohne dass eine zusätzliche Differenzdruckmessung über den Partikelfilter notwendig ist.

Alternativ oder zusätzlich ist in einer vorteilhaften Weiterentwicklung des Verfahrens vorgesehen, dass der Turbine des Abgasturboladers verstellbare Leitschaufeln zugeordnet sind, wobei die Beladung des Partikelfilters aus einer Stellung der Leitschaufeln ermittelt wird. Durch eine Verstellung der Leitschaufeln eines Abgasturboladers mit variabler Turbinengeometrie (auch als VTG-Lader bezeichnet) kann auf ähnliche Art und Weise wie durch ein Schließen des Waste-Gate-Ventils das Druckverhältnis über die Turbine des Abgasturboladers derart angepasst werden, dass der Leistungsverlust durch den infolge der zunehmenden Partikelfilterbeladung ansteigenden Abgasgegendruck kompensiert wird. Dabei kann aus der Stellung der Leitschaufeln auf einen Beladungszustand des Partikelfilters geschlossen werden, ohne dass eine zusätzliche Differenzdruckmessung über den Partikelfilter notwendig ist.

Gemäß einer vorteilhaften Verbesserung des Verfahrens ist vorgesehen, dass die Beladung des Partikelfilters aus der Stellung des Waste-Gate-Ventils und der Stellung der Leitschaufeln ermittelt wird. Durch eine Auswertung der Stellung des Waste-Gate-Ventils und der Stellung der Leitschaufeln der Turbine entsteht eine Redundanz, welche auch als Diagnosefunktion für die jeweils andere Komponente genutzt werden kann. Zudem kann durch die Auswertung zweier Signale die Genauigkeit der Messung verbessert werden und somit eine exaktere Bestimmung des Beladungszustands des Partikelfilters erfolgen.

Erfindungsgemäß ist vorgesehen, dass an dem Turbolader, insbesondere an der Turbine des Turboladers, ein Drehzahlgeber angeordnet ist, wobei die Beladung des Partikelfilters aus der Drehzahl des Abgasturboladers ermittelt wird. Um bei steigendem Abgasgegendruck infolge der zunehmenden Rußbeladung des Partikelfilters die gleiche Verdichterleistung des Abgasturboladers zu erreichen, steigt die Drehzahl des Abgasturboladers gegenüber dem gleichen Betriebszustand mit unbeladenem Partikelfilter und geringerem Abgasgegendruck. Somit kann das Signal des Drehzahlgebers und die daraus bestimmte Drehzahl des Abgasturboladers dazu genutzt werden, um auf einen Beladungszustand des Partikelfilters zu schließen.

Ergänzend ist mit Vorteil vorgesehen, dass eine Druckdifferenz über den Verdichter des Abgasturboladers gemessen wird. Aufgrund der vorherrschenden Temperaturen und aufgrund der in der Regel deutlich kürzeren Leitungslängen für die Sensoren auf der Frischluftseite kann eine Differenzdruckmessung über den Verdichter des Abgasturboladers genutzt werden, um eine eventuell vorhandene Leckage im Luftversorgungssystem zu erkennen. Dabei führen sowohl eine Leckage stromaufwärts des Verdichters als auch eine Leckage stromabwärts des Verdichters zu einer Veränderung des Druckverhältnisses über den Verdichter, sodass aus einer unerwarteten Änderung dieses Druckverhältnisses eine Leckage geschlossen werden kann. Zudem kann über das Druckverhältnis über den Verdichter eine Vorsteuerung des Luftmassenstroms auf der Frischgasseite des Verbrennungsmotors erfolgen, wodurch eine verbesserte Quantitätsregelung des Verbrennungsluftverhältnisses für die Brennräume und die damit verbundenen geringeren Rohemissionen möglich sind.

Gemäß einer weiteren Verbesserung des Verfahrens ist vorgesehen, dass die Regeleinrichtung der Turbine durch einen Aktuator, insbesondere durch einen elektrischen Stellmotor, verstellt wird. Um eine entsprechende Anpassung der Verdichterleistung des Abgasturboladers zu erreichen, ist wie vorhergehend beschrieben eine entsprechende Verstellung der Regeleinrichtung notwendig. Durch einen Aktuator kann auf einfache Art und Weise die Stellung eines Schließgliedes des Waste-Gate-Ventils, insbesondere eines Klappen- oder Schmetterlingsventils, verändert werden und ein Signal für die Stellung auf elektronischem Weg an ein Steuergerät des Verbrennungsmotors weitergegeben werden. Alternativ kann ein Aktuator genutzt werden, um die Leitschaufeln der verstellbaren Leitschaufeln des Turboladers zu verstellen. Ein elektrischer Stellmotor ist ein kleiner und kompakter Aktuator, welcher für die vorstehend beschriebenen Anforderungen zur Verstellung der Regeleinrichtung besonders geeignet ist.

Erfindungsgemäß wird ein Verbrennungsmotor mit einem Luftversorgungssystem nach Anspruch 3 ausgeführt. Bei einem erfindungsgemäßen Verbrennungsmotor kann auf eine zusätzliche Sensorik am Partikelfilter verzichtet werden, wodurch weniger Bauteile benötigt werden und die Kosten reduziert werden können.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Kraftfahrzeug mit einem mittels eines Abgasturboladers aufgeladenen Verbrennungsmotor, welcher dazu eingerichtet ist, ein erfindungsgemäßes Verfahren durchzuführen;
- Figur 2: ein Ablaufdiagramm zur Durchführung eines erfindungsgemäßen Verfahrens zum Ermitteln des Beladungszustands eines Partikelfilters.

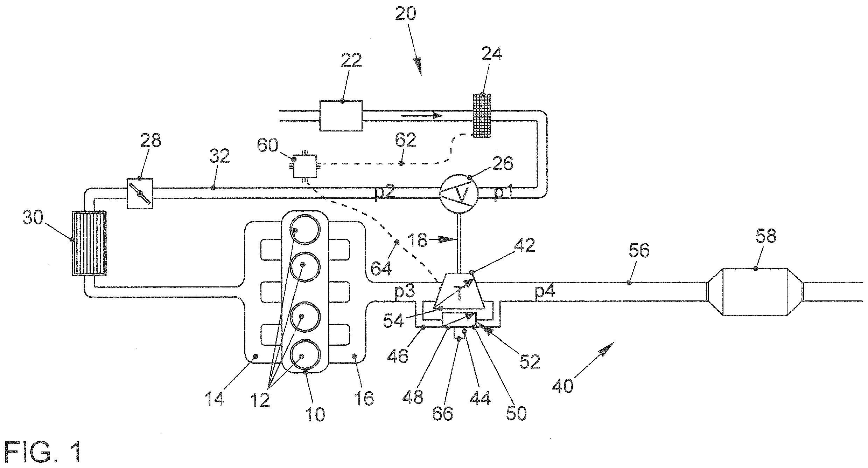

Figur 1 zeigt einen Verbrennungsmotor 10 für ein Kraftfahrzeug. Der Verbrennungsmotor 10 weist Brennräume 12 auf, in denen ein Kraftstoff-Luft-Gemisch verbrannt wird. Der Verbrennungsmotor 10 ist mit einem Einlass 14 an ein Luftversorgungssystem 20 des Verbrennungsmotors 10 angeschlossen. Das Luftversorgungssystem 20 umfasst in Strömungsrichtung von Frischluft durch eine Frischleitung 32 des Luftversorgungssystems 20 einen Luftfilter 22 und stromabwärts des Luftfilters 22 einen Luftmassenmesser 24, vorzugsweise einen Heißfilm-Luftmassenmesser. Stromabwärts des Luftmassenmessers 24 ist in der Frischluftleitung der Verdichter 26 eines Abgasturboladers 18 angeordnet, mit welchem die Frischluft zur besseren Füllung der Brennräume 12 verdichtet wird. Stromabwärts des Verdichters 26 ist eine Drosselklappe 28 zur Steuerung der den Brennräumen zugeführten Luftmenge angeordnet. Weiter stromabwärts in der Frischluftleitung 32 zwischen der Drosselklappe 28 und dem Einlass 14 des Verbrennungsmotors 10 ist ein Ladeluftkühler 30 angeordnet, um die verdichtete Luft des Verdichters 26 abzukühlen und die Füllung der Brennräume des Verbrennungsmotors 10 nochmals zu verbessern.

Der Verbrennungsmotor 10 durch einen Auslass 16 mit einer Abgasanlage 40 des Verbrennungsmotors 10 verbunden. Die Abgasanlage 40 weist in Strömungsrichtung eines Abgases des Verbrennungsmotors 10 durch einen Abgaskanal 56 der Abgasanlage eine Turbine 42 des Abgasturboladers 18 auf, welche starr über eine gemeinsame Welle mit dem Verdichter 26 gekoppelt ist und den Verdichter 26 antreibt. Der Abgasturbolader 18 weist ein Waste-Gate 46 auf, mit dem ein Teilstrom des Abgases an der Turbine 42 des Abgasturboladers 18 vorbeigeführt werden kann. In dem Waste-Gate 46 ist ein Waste-Gate-Ventil 48 angeordnet, mit welchem die durch das Waste-Gate 46 an der Turbine 42 vorbeiströmende Abgasmenge gesteuert werden kann. Die Turbine 42 ist vorzugsweise als Turbine 42 mit verstellbaren Leitschaufeln 52 ausgeführt. An der Turbine 42 ist ein Drehzahlgeber 54 angeordnet, mit dem eine Drehzahl des Abgasturboladers 18 ermittelt werden kann. An der Turbine 42 des Abgasturboladers ist zudem mindestens eine Regeleinrichtung 44 vorgesehen, mit der die Stellung des Waste-Gate-Ventils 48 und/oder die Position der verstellbaren Leitschaufeln 52 verändert werden kann. Die Regeleinrichtung 44 umfasst einen Aktuator 50, insbesondere einen elektrischen Stellmotor 66, zur Veränderung der Position der Leitschaufeln 52 und/oder zum Öffnen und Schließen des Waste-Gate-Ventils 48. In der Abgasanlage 40 ist stromabwärts der Turbine 42 ein Partikelfilter 58 angeordnet, welcher die bei der Verbrennung des Kraftstoff-Luft-Gemischs in den Brennräumen 12 des Verbrennungsmotors 10 entstehenden Rußpartikel aus dem Abgasstrom des Verbrennungsmotors 10 herausfiltert.

Dem Verbrennungsmotor 10 ist ein Steuergerät 60 zugeordnet, welches die in die Brennräume 12 des Verbrennungsmotors 10 eingebrachte Kraftstoffmenge regelt. Das Steuergerät 60 ist über eine erste Signalleitung 62 mit dem Luftmassenmesser 24 und über eine zweite Signalleitung mit der Regeleinrichtung 44 des Abgasturboladers 18 verbunden.

Im Betrieb des Verbrennungsmotors 10 wird der Partikelfilter 58 in der Abgasanlage 40 mit Rußpartikeln und Asche beladen. Dabei steigt der Abgasgegendruck p4 in der Abgasanlage 40 stromabwärts der Turbine 42 an. Infolge des Anstiegs des Abgasgegendrucks p4 nimmt das Druckgefälle p3/p4 über die Turbine 42 und somit die mögliche Turbinenleistung ab. Da die Turbine 42 und der Verdichter 26 des Abgasturboladers 18 mechanisch über eine Welle gekoppelt sind, sinkt folglich auch das mögliche Verdichterdruckverhältnis p2/p1. Der Verdichter 26 kann den geforderten Ladedruck p2 nicht mehr zur Verfügung stellen und somit sinkt auch die maximale Leistung des Verbrennungsmotors 10. Aus diesem Grund verfügen Abgasturbolader 18 über Regeleinrichtungen 44, insbesondere über ein Waste-Gate-Ventil 48 oder verstellbare Leitschaufeln 52. Mithilfe des Aktuators 50 kann die Position der Regeleinrichtung 44 verändert werden, wodurch direkt die Turbinenleistung des Abgasturboladers 18 beeinflusst werden kann.

Bei einem Abgasturbolader 18 mit Waste-Gate 46 kann der Leistungsverlust infolge des Anstiegs des Abgasgegendrucks p4 durch eine steigende Beladung des Partikelfilters 58 durch ein Schließen des Waste-Gate-Ventils 48 kompensiert werden. Durch das Schließen wird ein größerer Abgasmassenstrom über die Turbine 42 geleitet. Der Abgasmassenstrom über das Waste-Gate 46 sinkt. Somit steigt der Abgasdruck p3 vor der Turbine 42 an. Das Druckgefälle p4/p3 über die Turbine 42 steigt, wodurch sich die Turbinenleistung wieder auf das Niveau eines unbeladenen Partikelfilters 58 erhöht. Der Ladedruck kann nun wieder bereitgestellt werden, da mit der Turbinenleistung auch die Verdichterleistung wieder auf den Sollwert ansteigt.

Moderne Abgasturbolader 18 verfügen über eine Lagerückmeldung der aktuellen Position der Regeleinrichtung 44. Vergleicht man nun die Position der Regeleinrichtung 44 bei unbeladenem Partikelfilter 58 mit der Position bei beladenem Partikelfilter 58, lässt sich erkennen, dass sich die Position proportional mit der Beladung des Partikelfilters 58 ändert. Das Waste-Gate-Ventil 48 muss mit steigender Beladung immer weiter geschlossen werden, damit die identische Leistung bereitgestellt werden kann. Das nötige Ansteuerverhältnis des Waste-Gate-Ventils 48 beziehungsweise die Differenz zwischen Tastverhältnis mit und ohne Beladung des Partikelfilters 58 ist demnach ein Maß für die Druckerhöhung des Abgasgegendrucks p4 und somit ein Maß für die Beladung des Partikelfilters 58.

Dabei muss jedoch beachtet werden, dass eine Leckage in dem Luftversorgungssystem 20 stromabwärts des Verdichters 26 eine identische Reaktion der Regeleinrichtung 44 zur Folge hat. Durch den zusätzlichen Leckagestrom muss die Verdichterleistung erhöht werden, was nur möglich ist, wenn auch die Turbinenleistung erhöht wird. Zu diesem Zweck wird das Waste-Gate-Ventil 48 weiter geschlossen. Um zwischen einer Leckage im Luftversorgungssystem 20 stromabwärts des Verdichters 26 und einer Abgasgegendruckerhöhung stromabwärts der Turbine 42 infolge einer zunehmenden Beladung des Partikelfilters 58 unterscheiden zu können, muss im System ein Luftmassenmesser 24 eingebracht werden. Der Luftmassenmesser 24 misst kontinuierlich den von dem Verdichter 26 angesaugten Frischluftstrom. Mithilfe des Luftmassenmessers 24 ist es möglich, eine Erhöhung des Verdichtervolumenstroms durch eine Leckage zu erkennen. Mit dem Luftmassenmesser 24 kann eine Abweichung vom Sollmassenstrom in jedem Betriebspunkt erkannt werden. Somit ist eindeutig klar, ob es sich um eine Verdichtervolumenerhöhung aufgrund einer Leckage oder um eine Abgasgegendruckerhöhung aufgrund der zunehmenden Partikelfilterbeladung handelt, da sich der vom Verdichter 26 angesaugte Verdichtervolumenstrom bei einer Erhöhung des Abgasgegendrucks p4 aufgrund der zunehmenden Beladung des Partikelfilters 58 nicht erhöht. Dieser bleibt, bezogen auf den Betriebspunkt, konstant.

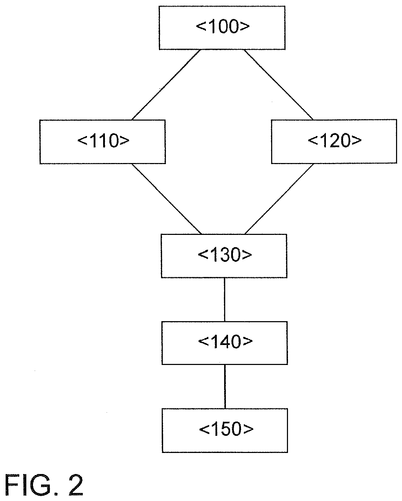

In Figur 2 ist ein Ablaufdiagramm eines erfindungsgemäßen Verfahrens zum Ermitteln des Beladungszustands des Partikelfilters 58 dargestellt. In einem ersten Verfahrensschritt <100> wird eine Drehzahl der Turbine 42 erfasst. Es wird in einem Verfahrensschritt <120> die erfasste Drehzahl der Turbine 42 mit einer Drehzahl der Turbine 42 bei gleichem Betriebs- und Lastzustand bei unbeladenem Partikelfilter 58 verglichen. In einem Verfahrensschritt <130> wird aus der ermittelten Drehzahl der Turbine 42 ein Beladungszustand des Partikelfilters 58 berechnet. In einem Verfahrensschritt <140> wird ein Frischluftmassenstrom in dem Luftversorgungssystem 20 stromaufwärts des Verdichters 26 ermittelt. In einem Verfahrensschritt <150> erfolgt dann anhand des ermittelten Frischluftmassenstroms eine Auswertung, ob das System ordnungsgemäß funktioniert, oder ob ein Fehler, insbesondere eine Leckage in dem Luftversorgungssystem 20 stromabwärts des Verdichters 26, vorhanden ist.

### Bezugszeichenliste

- 10: Verbrennungsmotor
- 12: Brennräume
- 14: Einlass
- 16: Auslass
- 18: Abgasturbolader

- 20: Luftversorgungssystem
- 22: Luftfilter
- 24: Luftmassenmesser
- 26: Verdichter
- 28: Drosselklappe
- 30: Ladeluftkühler
- 32: Frischluftleitung

- 40: Abgasanlage
- 42: Turbine
- 44: Regelungseinrichtung
- 46: Waste-Gate
- 48: Waste-Gate-Ventil
- 50: Aktuator
- 52: verstellbare Leitschaufeln
- 54: Drehzahlgeber
- 56: Abgaskanal
- 58: Partikelfilter

- 60: Steuergerät
- 62: Signalleitung
- 64: Signalleitung
- 66: elektrischer Stellmotor

## Patentansprüche

1. Verfahren zum Ermitteln des Beladungszustandes eines in einer Abgasanlage (40) eines Verbrennungsmotors (10) angeordneten Partikelfilters (58), wobei der Verbrennungsmotor (10) mittels eines Abgasturboladers (18) mit einem im Luftversorgungssystem (20) des Verbrennungsmotors (10) angeordneten Verdichter (26) und einer in der Abgasanlage (40) angeordneten Turbine (42) aufgeladen ist, wobei in dem Luftversorgungssystem (20) des Verbrennungsmotors (10) ein Luftmassenmesser (24) angeordnet ist, und wobei an der Turbine (42) des Abgasturboladers (18) ein Drehzahlgeber zur Ermittlung der Drehzahl der Turbine (42) angeordnet ist, umfassend folgende Schritte:
- Ermitteln einer Drehzahl der Turbine (42);
- Ermitteln eines Frischluftmassenstroms;
- Vergleich der ermittelten Drehzahl mit der Drehzahl bei gleichem Betriebszustand und unbeladenem Partikelfilter (58);
- Berechnen des Beladungszustands des Partikelfilters (58) aus der ermittelten Drehzahl der Turbine (42) und des ermittelten Frischluftmassenstroms; wobei
- anhand der ermittelten Drehzahl der Turbine (42) und des ermittelten Frischluftmassenstroms eine Auswertung erfolgt, ob das System ordnungsgemäß funktioniert, oder ob eine Leckage in dem Luftversorgungssystem (20) stromabwärts des Verdichters (26) vorhanden ist.

2. Verfahren nach Anspruch 1, **dadurch gekennzeichnet, dass** der Frischluftstrom im Luftversorgungssystem (20) stromaufwärts eines Verdichters (26) des Abgasturboladers (18) ermittelt wird.

3. Verbrennungsmotor (10) mit einem Luftversorgungssystem (20) und einer Abgasanlage (40), wobei dem Verbrennungsmotor (10) ein Abgasturbolader (18) mit einem in dem Luftversorgungssystem (20) angeordneten Verdichter (26) und einer in der Abgasanlage (40) angeordneten Turbine (42), welche den Verdichter (26) zur Verdichtung der den Brennräumen (12) des Verbrennungsmotors (10) zugeführten Frischluft antreibt, zugeordnet ist, wobei in dem Luftversorgungssystem (20) des Verbrennungsmotors (10) ein Luftmassenmesser (24) zur Ermittlung einer Frischluftstroms angeordnet ist, wobei in der Abgasanlage (40) stromabwärts einer Turbine (42) des Abgasturboladers (18) ein Partikelfilter (58) angeordnet ist, wobei an einer Turbine (42) des Abgasturboladers (18) eine Regeleinrichtung (44) zur Ermittlung der Drehzahl eines Drehzahlgebers (54) der Turbine (42) angeordnet ist, und wobei dem Verbrennungsmotor (10) ein Steuergerät (60) zugeordnet ist, welches ein Verfahren nach einem der Ansprüche 1 oder 2 ausführt, wenn ein maschinenlesbarer Programmcode auf dem Steuergerät (60) ausgeführt wird.

## Claims

1. Method for determining the load state of a particle filter (58) arranged in an exhaust system (40) of a combustion engine (10), wherein the combustion engine (10) is charged by means of an exhaust gas turbocharger (18) with a compressor (26) arranged in the air supply system (20) of the combustion engine (10) and a turbine (42) arranged in the exhaust system (40), wherein an air-mass sensor (24) is arranged in the air supply system (20) of the combustion engine (10), and wherein a rotational speed transmitter for determining the rotational speed of the turbine (42) is arranged on the turbine (42) of the exhaust gas turbocharger (18), comprising the following steps:
- determining a rotational speed of the turbine (42);
- determining a fresh air mass flow;
- comparing the determined rotational speed to the rotational speed at the same operating state and unloaded particle filter (58);
- calculating the load state of the particle filter (58) from the determined rotational speed of the turbine (42) and the determined fresh air mass flow; wherein
- on the basis of the determined rotational speed of the turbine (42) and the determined fresh air mass flow, an evaluation takes place as to whether the system functions properly or whether leakage is present in the air supply system (20) downstream of the compressor (26).

2. Method according to claim 1, **characterized in that** the fresh air flow is determined in the air supply system (20) upstream of a compressor (26) of the exhaust gas turbocharger (18).

3. Combustion engine (10) having an air supply system (20) and an exhaust system (40), wherein the combustion engine (10) is associated with an exhaust gas turbocharger (18) with a compressor (26) arranged in the air supply system (20) and a turbine (42) that is arranged in the exhaust system (40) and drives the compressor (26) for compressing the fresh air fed to the combustion chambers (12) of the combustion engine (10), wherein an air-mass sensor (24) for determining a fresh air flow is arranged in the air supply system (20) of the combustion engine (10), wherein a particle filter (58) is arranged in the exhaust system (40) downstream of a turbine (42) of the exhaust gas turbocharger (18), wherein a control device (44) for determining the rotational speed of a rotational speed transmitter (54) of the turbine (42) is arranged on a turbine (42) of the exhaust gas turbocharger (18), and wherein the combustion engine (10) is associated with a control unit (60) which executes a method according to one of claims 1 or 2 if a machine-readable program code is executed on the control unit (60).

## Revendications

1. Procédé de détermination de l'état de charge d'un filtre à particules (58) agencé dans une installation d'échappement (40) d'un moteur à combustion interne (10), dans lequel le moteur à combustion interne (10) est chargé au moyen d'un turbocompresseur (18) avec un compresseur (26) agencé dans un système d'alimentation en air (20) du moteur à combustion interne (10) et une turbine (42) agencée dans l'installation d'échappement (40), dans lequel un dispositif de mesure des masses d'air (24) est agencé dans le système d'alimentation en air (20) du moteur à combustion interne (10), et dans lequel un capteur de vitesse de rotation est agencé sur la turbine (42) du turbocompresseur (18) pour déterminer la vitesse de rotation de la turbine (42), comprenant les étapes suivantes :
- détermination d'une vitesse de rotation de la turbine (42) ;
- détermination d'un flux massique d'air frais ;
- comparaison de la vitesse de rotation déterminée à la vitesse de rotation avec un état de fonctionnement identique et un filtre à particules (58) à vide ;
- calcul de l'état de charge du filtre à particules (58) à partir de la vitesse de rotation déterminée de la turbine (42) et du flux massique d'air frais déterminé ; dans lequel
- à l'aide de la vitesse de rotation déterminée de la turbine (42) et du flux massique d'air frais déterminé, une évaluation est effectuée, pour savoir si le système fonctionne correctement ou si une fuite est présente dans le système d'alimentation en air frais (20) en aval du compresseur (26).

2. Procédé selon la revendication 1, **caractérisé en ce que** le flux d'air frais dans le système d'alimentation en air (20) est déterminé en amont d'un compresseur (26) du turbocompresseur (18).

3. Moteur à combustion interne (10) comprenant un système d'alimentation en air (20) et une installation de gaz d'échappement (40), dans lequel un turbocompresseur (18) avec un compresseur (26) agencé dans le système d'alimentation en air (20) et une turbine (42) agencée dans l'installation de gaz d'échappement (40), qui entraîne le compresseur (26) pour comprimer l'air frais alimenté dans les chambres de combustion (12) du moteur à combustion interne (10), est associé au moteur à combustion interne (10), dans lequel un dispositif de mesure des masses d'air (24) est agencé pour la détermination d'un flux d'air frais dans le système d'alimentation en air (20) du moteur à combustion interne (10), dans lequel un filtre à particules (58) est agencé dans l'installation de gaz d'échappement (40) en aval d'une turbine (42) du turbocompresseur (18), dans lequel un dispositif de régulation (44) est agencé sur la turbine (42) du turbocompresseur (18) pour déterminer la vitesse de rotation d'un capteur de vitesse de rotation (54) de la turbine (42) et dans lequel un appareil de commande (60) est associé au moteur à combustion interne (10), qui réalisé un procédé selon l'une quelconque des revendications 1 ou 2, lorsqu'un code de programme lisible par machine est exécuté sur l'appareil de commande (60).
